(19) Europäisches Patentamt / European Patent Office / Office européen des brevets

(11) **EP 3 225 051 B1**

(12) **EUROPEAN PATENT SPECIFICATION**

(45) Date of publication and mention of the grant of the patent:
**10.06.2020 Bulletin 2020/24**

(21) Application number: **15863986.4**

(22) Date of filing: **19.08.2015**

(51) Int Cl.:
*H04B 7/022* (2017.01)  *H04B 7/06* (2006.01)
*H04L 5/00* (2006.01)  *H04B 17/309* (2015.01)
*H04W 36/02* (2009.01)  *H04W 36/30* (2009.01)

(86) International application number:
**PCT/KR2015/008669**

(87) International publication number:
**WO 2016/085092 (02.06.2016 Gazette 2016/22)**

(54) **METHOD AND SYSTEM FOR CONTROLLING TRANSMISSION OF CODE WORDS DURING HANDOVER IN A WIRELESS NETWORK**

VERFAHREN UND SYSTEM ZUR STEUERUNG DER ÜBERTRAGUNG VON CODEWÖRTERN WÄHREND DER ÜBERGABE IN EINEM DRAHTLOSEN NETZWERK

PROCÉDÉ ET SYSTÈME POUR COMMANDER LA TRANSMISSION DE MOTS DE CODE AU COURS D'UN TRANSFERT INTERCELLULAIRE DANS UN RÉSEAU SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.11.2014 IN 5974CH2014**
**08.04.2015 KR 20150049917**

(43) Date of publication of application:
**04.10.2017 Bulletin 2017/40**

(73) Proprietor: **Samsung Electronics Co., Ltd.**
**Gyeonggi-do 16677 (KR)**

(72) Inventors:
• **KIZHAKKEMADAM, Sriram N.**
  **Bangalore 560040 (IN)**

• **RAMAMOORTHY, Shrinath**
  **Bangalore 560066 (IN)**
• **AGIWAL, Anil**
  **Bangalore 560066 (IN)**

(74) Representative: **Nederlandsch Octrooibureau**
**P.O. Box 29720**
**2502 LS The Hague (NL)**

(56) References cited:
**EP-A1- 2 389 026    WO-A1-2014/019106**
**WO-A1-2014/019106    US-A1- 2011 310 786**
**US-A1- 2013 017 825    US-A1- 2013 039 349**
**US-A1- 2013 201 896    US-A1- 2014 036 881**

**Description**

**Technical Field**

The present disclosure generally relates to wireless communication systems and more particularly to a handover of a user equipment (UE) to a plurality of base stations (BSs).

**Background Art**

To meet the demand for wireless data traffic having increased since deployment of 4G communication systems, efforts have been made to develop an improved 5G or pre-5G communication system. Therefore, the 5G or pre-5G communication system is also called a 'Beyond 4G Network' or a 'Post LTE System'.

The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems.

In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like.

In the 5G system, Hybrid FSK and QAM Modulation (FQAM) and sliding window superposition coding (SWSC) as an advanced coding modulation (ACM), and filter bank multi carrier(FBMC), non-orthogonal multiple access(NOMA), and sparse code multiple access (SCMA) as an advanced access technology have been developed.

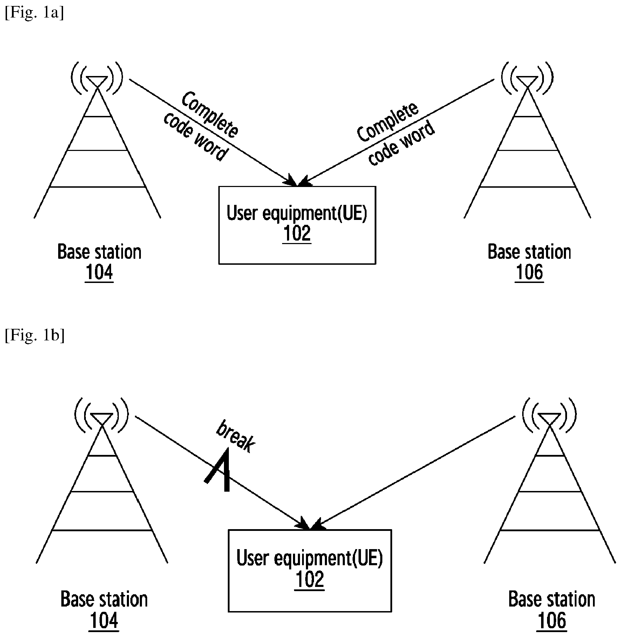

Generally, handover (HO) is an important procedure in a cellular transmission as it enables service continuity within a same radio access technology (RAT) or across different RATs. In existing systems, a hard HO and a soft HO are available for a UE to switch from a source base station to a target base station; thereby, maintaining the continuity of service. In soft HO, the UE receives downlink data from multiple BS while the HO procedure is being followed i.e., during the time of HO; the UE has the radio link with both the source base station and the target base station. If the UE is connected to two (or multiple) BSs during the HO then the UE will receive complete code word from the source and target base station as indicated in FIG. 1A.

In hard HO, the UE has to break the radio link with the source base station before the new radio link can be established with the target base station i.e., at any point of time the UE has the radio link with only one base station as indicated in FIG. 1B. In the hard HO, particularly in Global System for Mobile Communications (GSM), Long Term Evolution (LTE) and inter-frequency HO in Code division multiple access (CDMA) based technologies, when the UE meets the HO condition then the UE will transmit measurement reports of a signal strength of the neighbor BS whose signal strength is improving when compared to the source BS. Based on the reports, the source BS will provide the radio link details of the target BS to the UE. The UE will break the link with the source BS and establish the new link with the target BS. The hard HO of Long Term Evolution (LTE) is one of the causes for ping-pong effect that leads to an overhead in signaling. To mitigate ping-pong effect, one possible solution is to have a joint transmission during HO. The joint transmission of a complete code word from the serving and target base stations during the HO will increase the usage of scarce spectrum resources and decrease the overall cell spectral efficiency.

The joint processing from the multiple BSs can be in the form of dynamic point switching (DPS); wherein, only one BS can transmit to the UE at a given time instant or joint transmission (JT); wherein, all the BSs in the transmission set transmit the same data to the UE simultaneously. In both the modes of transmissions, data packet for the UE is available at all the BSs in the transmitting set. The JT is more attractive in light of the link fragility in mm-wave systems. Due to the link fragility, soft handover will be preferred in comparison to hard handover. In currently known soft handover schemes, complete data is transmitted by a plurality of BSs that participate in the HO procedure. Thus, there is an overhead both during transmission of data as well as during HO. Considering the link fragility of mm-wave systems and the necessity for small cells, the number of handovers will increase. Consequently, due to the overhead during handover and increased number of handovers, the system throughput will decrease significantly.

The above information is presented as background information only to help the reader to understand the present disclosure. Applicants have made no determination and make no assertion as to whether any of the above might be applicable as Prior Art with regard to the present application.

US 2013/0017825 A1 describes a method of reducing an amount of channel information fed back by a mobile device in a wireless communication system to a plurality of transmission points of the wireless communication system. The method comprises measuring signal quality between the mobile device and the plurality of transmission points, determining a set of the plurality of transmission points, if the signal quality is in one of a plurality of quality regions, and feeding back the channel information to the set of the plurality of transmission points, wherein the channel information is related to a plurality of transmission points.

**Disclosure of Invention**

**Solution to Problem**

To address the above-discussed deficiencies, it is a primary object to provide a method and system for controlling transmission of code words during handover in a wireless network.

Another object of the embodiments herein is to provide a plurality of coordinated transmission modes indicating whether a user equipment (UE) receives a complete code word from a base station (BS) or a partial code word from a BS or a combination of complete code word from some BS and partial code word from other set of BS based on a coordinated transmission threshold criteria.

Embodiments herein provide a method for operating a base station in a wireless network according to claim 1..

Embodiments herein provide a base station apparatus in a wireless network according to claim 6.

Herein, the SINR corresponds to an example of channel quality information and another kind of channel quality information such as a carrier to interference plus noise ratio (CINR) can be applied to the SINR.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation. Many changes and modifications can be made within the scope of the embodiments herein without departing from the spirit thereof, and the embodiments herein include all such modifications.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

**Brief Description of Drawings**

For a more complete understanding of the present disclosure and its advantages, reference is now made to the following description taken in conjunction with the accompanying drawings, in which like reference numerals represent like parts: This disclosure is illustrated in the accompanying drawings, throughout which like reference letters indicate corresponding parts in the various figures. The embodiments herein will be better understood from the following description with reference to the drawings, in which:

FIGS. 1A and 1B illustrate a handover mechanism in mobile communication systems;
FIG. 2 illustrates a high level overview of a system for controlling transmission of code words to a UE, according to embodiments as disclosed herein;
FIG. 3 illustrates various modules in a BS 104 or a BS 106, according to embodiments as disclosed herein;
FIG. 4 illustrates various modules in a UE 102 according to an embodiment of the present disclosure;
FIG. 5 illustrates an example scenario of state transition for controlling transmission of code words to a UE during one or more coordinated transmission modes, according to embodiments as disclosed herein; and
FIG. 6 is a flow diagram illustrating a method for controlling transmission of code words during handover or otherwise in a wireless network, according to embodiments as disclosed herein.

**Best Mode for Carrying out the Invention**

FIGURES 1 through 6, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged telecommunication technologies. The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. Also, the various embodiments described herein are not necessarily mutually exclusive, as some embodiments can be combined with one or more other embodiments to form new embodiments. The term "or" as used herein, refers to a non-exclusive or, unless otherwise indicated. The examples used herein are intended merely to facilitate an understanding of ways in which the embodiments herein can be practiced and to further enable those skilled in the art to practice the embodiments herein. Accordingly, the examples should not be construed as limiting the scope of the embodiments herein.

The embodiments herein disclose a method and system for controlling transmission of code words for handover or otherwise in a wireless network including a plurality of base stations (BSs). The method includes receiving a signal-to-interference-plus-noise ratio (SINR) associated with a UE served by one or more BSs. The BSs are associated with a plurality of coordinated transmission modes. The coordinated transmission mode indicates whether each of the BS transmits a complete code word or a partial code word to the UE based on transmission threshold criteria. Further, the method includes determining whether the SINR meets the coordinated transmission threshold criteria to select one or more coordinated transmission modes for transmission of the code word from the BSs to the UE. In an embodiment, the coordinated transmission threshold criteria include a time criteria. Herein, the SINR corresponds to an example of channel quality information and another kind of channel quality information such as a carrier to interference plus noise ratio (CINR) can be applied to the SINR.

The method and system described herein is simple and robust for controlling transmission of code words for handover in the wireless network.

Unlike conventional systems, the resources are conserved and the signaling overhead is decreased. The handover is no longer limited to changing the serving BS for the UE. During the handover with joint transmission, the length of the code word transmitted by each of the BS is not same. The handover is similar to the soft handover with the difference being that the length of the code word transmitted by the multiple BSs is not same. For example, if one BS transmits the complete code word and the other BS transmits a function of the code word whose length is less than that of the complete code word; thereby achieving a significant decrease in the DL transmission overhead.

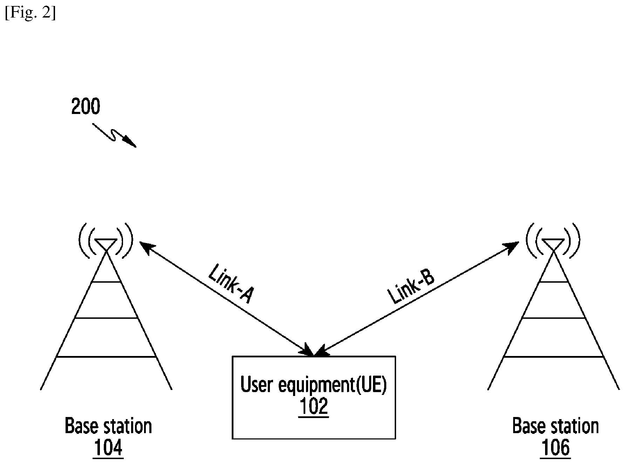

Referring now to the drawings, and more particularly to FIGS. 2 through 5, where similar reference characters denote corresponding features consistently throughout the figures, there are shown preferred embodiments.

FIG. 2 illustrates a high level overview of a system 200 for controlling transmission of code words to a UE, according to embodiments as disclosed herein. In an embodiment, the system 200 can be configured to include a UE 102, a base station (BS) 104, and a base station (BS) 106.

The UE 102 described herein can be for example but not limited to a mobile phone, a mobile station, a smart phone, a personal digital assistants (PDAs), a tablet, a phablet, or any other electronic device. The UE 102 can be configured to get served by the BS 104 through a "link-A" and the BS 106 through a "link-B" in the downlink as shown in the FIG. 2.

The BS 104 and BS 106 forms the transmission set for transmitting either complete or partial code words to the UE 102. The BS 104 and BS 106 can send code words to the UE 102 through the "link-A" and "link-B". For the purpose of transmission to the UE 102, the transmission set can have a leader called as master BS (not shown). In an embodiment, the master BS can either be one among the transmission set (i.e. either the BS 104 or the BS 106) or it can be distinct from the BS 104 and the BS 106 in the transmission set. The BS 104 and BS 106 can be configured to be associated with a plurality of coordinated transmission modes. Here, the coordinated transmission modes indicate whether each of the BS 104 and BS 106 should transmit either the complete code word or the partial code word to the UE 102 based on the coordinated transmission threshold criteria. In an embodiment, the master BS can be required in a centralized scheduling for the UE 102. In another embodiment, if a distributed scheduling is used then the master BS can be optional.

The BS 104 and the BS 106 can be configured to receive the information regarding the SINR and other measurements data of the UE 102 through the centralized or distributed mechanism. For example, in the centralized mechanism, the information can be made available to either of the BS 104 and the BS 106. Further, the BS 104 or the BS 106 can be configured to receive the SINR associated with the UE 102. Further, the BS 104 or the BS 106 can be configured to determine whether the SINR meets the coordinated transmission threshold criteria to select the coordinated transmission mode for the transmission of the code words from the BS 104 and the BS 106 to the UE 102. For example, in the coordinated transmission mode either BS 104 or the BS 106 can transmit a function of the partial code word or even the partial information corresponding to the function of a code word. In another coordinated transmission mode, either BS 104 or the BS 106 can transmit the complete code word to the UE 102. For example, consider a scenario wherein 2 BSs (i.e. a first BS and a second BS) can serve the UE 102 either singly or jointly. The set of possible coordinated transmission modes are as follows:

Only either of the first BS or the second BS transmits the complete code word to the UE 102.

Both the first BS and the second BS transmits the complete code word to the UE 102.

The first BS transmits the complete code word while the second BS transmits either partial code word or even the function of the original code word with the code word length being less than or equal to that transmitted by the first BS.

Both the first BS and the second BS transmit only the partial code word. Again the partial code word can be part of the original code word or a function of the original code word with the length of the partial code word being strictly less than that of the complete code word.

Further, the UE 102 can be configured to maintain a set of timer values and radio link failure (RLF) counters at the BS for the handover based on the selected coordinated transmission mode. The timer values to be satisfied for the UE 102 to transition from one coordinated transmission mode to the another coordinated transmission mode are disclosed below:

$S_{12} : t_{11}$ for all the BS that will transmit partial code word, $t_{12}$ for all the BS that will transmit complete code word
$S_{13} : t_2$
$S_{14} : t_3$
$S_{21} : t_4$
$S_{23} : t_5$
$S_{24} : t_6$
$S_{31} : t_7$
$S_{32} : t_{81}$ for all the BS that will transmit partial code word, $t_{82}$ for all the BS that transmit complete code word
$S_{34} : t_9$

The FIG. 2 show a limited overview of the system 200 but, it is to be understood that another embodiment is not limited thereto. Further, the system 200 can include different BSs communicating among each other along with other hardware or software components.

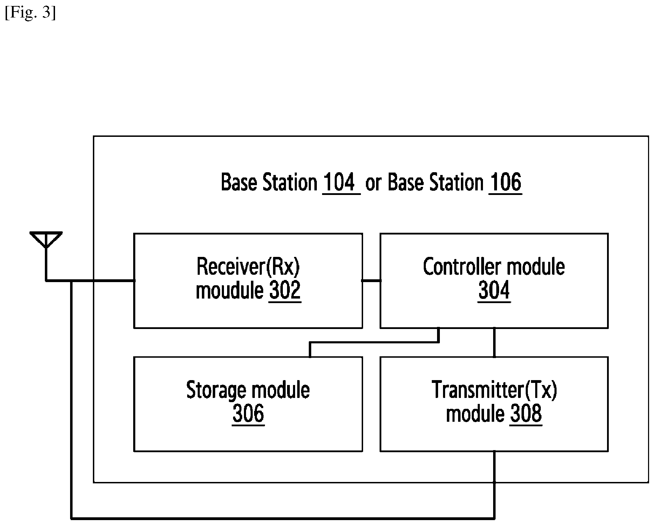

FIG. 3 illustrates various modules in a BS 104 or a BS 106, according to embodiments as disclosed herein. In an embodiment, the BS 104 or BS 106 can be configured to include a receiver (Rx) module 302, a controller module 304, a storage module 306, and a transmitter (Tx) module 308.

The Rx module 302 can be configured to receive the SINR associated with the UE 102 served by the BS 104 or the BS 106. In an embodiment, the UE 102 is associated with one or more coordinated transmission modes indicating whether the UE 102 receives a complete code word from the BS, or a combination of complete code word from some BS and partial code word from other set of BS based on a coordinated transmission threshold criteria. Further, the Rx module 302 can be configured to send the received SINR associated with the UE 102 to the controller module 304. On receiving the SINR, the controller module 304 can be configured to determine whether the SINR meets the coordinated transmission threshold criteria to select the coordinated transmission mode for transmission of the code words from the BS 104 or the BS 106 to the UE 102.

In an embodiment, determining whether the SINR meets the coordinated transmission threshold criteria to select the coordinated transmission mode for reception of the code word from the BS 104 or the BS 106 to the UE 102 includes determining whether the SINR is within the first coordinated transmission threshold by the controller module 304 where the first coordinated transmission threshold is associated with a first coordinated transmission mode from the one or more coordinated transmission modes. The first coordinated transmission mode is selected in after determining that the SINR is within the first coordinated transmission threshold and the first coordinated transmission mode allows the BS 104 and the BS 106 to transmit the complete code word to the UE 102.

In another embodiment, if the controller module 304 determines whether the SINR is within a second coordinated transmission threshold criteria after determining that the SINR exceeds the first coordinated transmission threshold where the second coordinated transmission threshold is associated with a second coordinated transmission mode from the plurality of coordinated transmission modes. The second coordinated transmission mode is selected after determining that the SINR is within the second coordinated transmission threshold and the second coordinated transmission mode allows BS 104 or the BS 106 to transmit the complete code word to the UE 102 and BS 104 or the BS 106 to transmit the partial code word to the UE 102.

In another embodiment, if the controller module 304 determines the SINR is within a third coordinated transmission threshold after determining that the SINR exceeds the second coordinated transmission threshold where the third coordinated transmission threshold is associated with a third coordinated transmission mode from the plurality of coordinated transmission modes. The third coordinated transmission mode is selected after determining that the SINR is within the third coordinated transmission threshold where the third coordinated transmission mode allows the BS 104 and the BS 106 to transmit the partial code word to the UE 102.

In another embodiment, the controller module 304 can be configured to select a fourth coordinated transmission mode after determining that the SINR exceeds the third coordinated transmission threshold where the fourth coordinated transmission mode allows only BS 104 or BS 106 to transmit the complete code word to the UE 102.

The storage module 306 can be configured to store coordinated transmission threshold criteria for each coordinated transmission mode. The storage module 306 can be configured to store control instructions to perform various operation. The Tx module 308 can be configured to transfer the complete or partial code words to the UE 102 based on the determined coordinated transmission mode.

The FIG. 3 show a limited overview of the BS 104 or the BS 106 but, it is to be understood that other embodiment is not limited thereto. Further, the BS 104 or the BS 106 can include any number of modules communicating among each other along with the other components of the system 200.

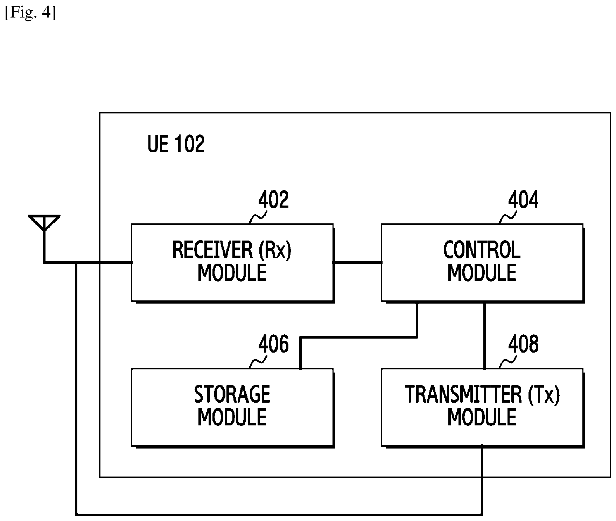

According to the described embodiment, FIG. 4 illustrates various modules in a UE 102. In the embodiment, the UE 102 can include an receiver (Rx) module 402, a controller module 404, a storage module 406, and a transmitter (Tx) module 408.

The Rx module 402 receives a signal transmitted from another device. For example, the Rx module 402 can be configured to receive a complete code word or a partial code word according to a coordinated transmission mode from the BS 104 or the BS 106 in the UE 102. The controller module 404 controls overall functions of the UE 102. For example, the controller module 404 can receive and transmit a signal by controlling the Rx module 402 and the Tx module 408. Further, the controller module 404 can store data in the storage module 406 and read the stored data. The storage module 406 is configured to store a control command for performing various operations. The Tx module 408 is configured to transmit the SINR to the BS 104 or the BS 106.

In the embodiment, the UE 102 is associated with one or more coordinated transmission mode representing whether the UE 102 receives a complete code word from the BS, whether the UE 102 receives a combination of the complete code word from one BS, and whether the UE 102 receives a partial code word from another BS set on the basis of a coordinated transmission threshold criteria.

FIG. 4 illustrates a limited overview of the UE 102. However, this should not be understood as a limitation of the embodiment. Also, the UE 102 can include a predetermined module which communicates with another element of the system 200.

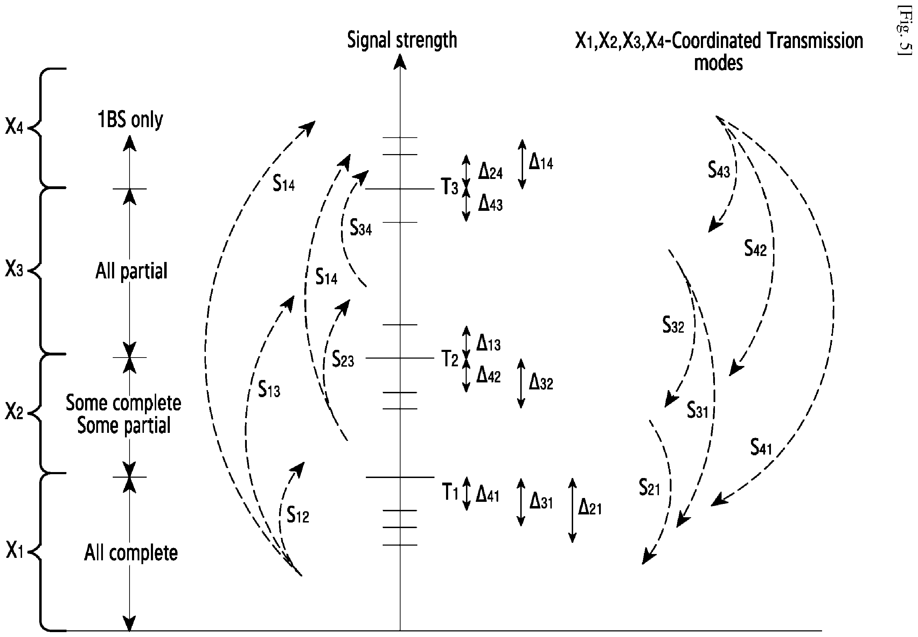

FIG. 5 illustrates an example scenario of state transition for controlling transmission of code words to a UE during one or more coordinated transmission modes, according to embodiments as disclosed herein. In an embodiment, the different coordinated transmission modes during the handover procedure are described below as shown in the FIG. 4. The Y-axis represents increase in signal strength value. Here, X1, X2, X3, and X4 are the four coordinated transmission modes. Where,

X1: Transmission of complete code word by all BSs for the UE.
X2: Transmission of partial code word by some BSs and complete code word by the rest of the BSs for the UE.
X3: Transmission of partial code word by all BSs for the UE.
X4: Transmission of complete code word by only one BS in for the UE.

Also, T1, T2, and T3 are the coordinated transmission threshold criteria's and delta is related to a bias value of a specific state. If the signal strength is very low then the BS 104 and the BS 106 will transmit the complete code word to the UE 102. For example, if the SINR of the UE 102 is within the first coordinated transmission threshold "T1" where the first coordinated transmission threshold "T1" is associated with the first coordinated transmission mode "X1", then the first coordinated transmission mode "X1" is selected which allows the BS 104 and BS 106 to transmit the complete code word to the UE 102. Further, if the signal strength increases to the second coordinated transmission threshold "T2" exceeding the first coordinated transmission threshold "T1" (i.e., the SINR of the UE 102 is within a second coordinated transmission threshold "T2") after determining that the SINR exceeds the first coordinated transmission threshold "T1" then the second coordinated transmission mode "X2" is selected allowing either the BS 104 or the BS 106 to transmit the complete code word to the UE 102 and allows either the BS 104 or the BS 106 to transmit the partial code word to the UE 102. For example, in the second coordinated transmission mode "X2", the BS 104 can transmit the complete code word to the UE 102 and the BS 106 can transmit the partial code word to the UE 102. In another example, in the second coordinated transmission mode "X2", the BS 104 can transmit the partial code word to the UE 102 and the BS 106 can transmit the complete code word to the UE 102.

If the signal strength increases to the third coordinated transmission threshold "T3" exceeding the second coordinated transmission threshold "T2" (i.e., the SINR of the UE 102 is within the third coordinated transmission threshold "T3") after determining that the SINR exceeds the second coordinated transmission threshold "T2" then the third coordinated transmission mode "X3" is selected allowing the BS 104 and the BS 106 to transmit the partial code word to the UE 102. Further, if the signal strength exceeds the third receive threshold "T3" (i.e., the SINR of the UE 102 exceeds the third coordinated transmission threshold "T3"), then the fourth coordinated transmission mode "X4" is selected allowing only the BS 104 or the BS 106 to transmit the complete code word to the UE 102. For example, in the fourth coordinated transmission mode "X4", only the BS 104 can transmit the complete code word to the UE 102. In another example, in the fourth coordinated transmission mode "X4", only the BS 106 can transmit the complete code word to the UE 102.

In another example, if the SINR of the UE 102 is within the first coordinated transmission threshold "T1" where the first coordinated transmission threshold "T1" is associated with the first coordinated transmission mode "X1", then the first coordinated transmission mode "X1" is selected which allows the BS 104 and the BS 106 to transmit the complete code word to the UE 102. Further, if the signal strength increases to the third coordinated transmission threshold "T3" exceeding the first coordinated transmission threshold "T1" and the second coordinated transmission threshold "T2" (i.e., the SINR of the UE 102 is within a third coordinated transmission threshold "T3") after determining that the SINR exceeds the first coordinated transmission threshold "T1" and the second coordinated transmission threshold "T2" then the third coordinated transmission mode "X3" is selected allowing the BS 104 and the BS 106 to transmit the partial code word to the UE 102.

In an embodiment, the transition of the UE 102 from one coordinated transmission mode to the another coordinated transmission modes depend on the effective received SINR associated with the UE 102 after receiving the complete or partial code words from the BS 104 and the BS 106. The effective received SINR (also called as post-processing SINR) depends on the length of the code word selected for the partial code word transmission and the number of BSs co-operating in the transmission of the code words. The notation SINRi denotes the averaged SINR at the UE from the BSi. For example, SINRI denotes the averaged SINR at the UE 102 from the BS 104. In another example, SINR2 denotes the averaged SINR at the UE 102 from the BS 106. The method to determine the possible coordinated transmission modes and the length of the code word from each of the BS is disclosed below:

By estimating the length of the code word from each BS (xi) that maximizes a utility function (f) as given below subject to the constraint that the length of each code word from all the BSs should be at least "$l_1$" and the number of BSs transmitting the data from |B| BS is less than "a" and "I" denotes the indicator function

$$\hat{x} = \max_{x} f\left(x, H_i, \text{SINR}_i\right)$$

$$s.t.$$

$$x_i \geq l_1$$

$$\sum_{i=1}^{|B|} I\left(x_i \geq l_1\right) \leq a \leq |B|$$

$$\ldots\ldots\ldots\ldots\ldots\ldots\ldots\text{Equation 1}$$

Quantize the lengths to match that of the transport block size (TBS):

$$\tilde{x} = Q(x)$$

$$\ldots\ldots\ldots\ldots\ldots\ldots\ \text{Equation2}$$

Obtain the effective SINR with the new quantized lengths:

$$SNR_c = g\left(\tilde{x}, SINR_1, \cdots SINR_{|B|}\right)$$

$$\ldots\ldots\ldots\ldots\ldots\ldots\ldots\ldots\text{Equation3}$$

The effective SINR should satisfy the following conditions for transition from one coordinated transmission mode to another coordinated transmission mode

Complete code word by the BS: $\text{SINR}_C \leq T1$

Partial code word by some BS and complete code word by the other BS: $T1 < \text{SINR}_C \leq T2$

Partial code word by all BS: $T2 \leq \text{SINR}_C \leq T3$

Complete code word by the BS: $SINR_C > T3$

The timer values for the transition of the UE from one coordinated transmission mode to another coordinated transmission mode should satisfy the conditions which are described in conjunction with the FIG. 2.

In an embodiment, the conditions for each of the coordinated transmission modes (i.e., X1, X2, X3, and X4) are described below. Here, the BS1 can be BS 104 and the BS2 can be BS 106.

- $S_{12}$: $\quad$ $SINR_i < T1 \ \forall\, i \in B_1$

$T1 \leq \ SINR_j \ \leq T2 \ \forall\, j \in B_2$

$B = B_1 \cup B_2$

$B_1 \cap B_2 = \theta$

- $S_{21}$: $SINR_i < T1 - \Delta_{21} \ \forall\, i \in B$

- $S_{31}$: $SINR_i < T1 - \Delta_{31} \ \forall\, i \in B$

- $S_{13}$: $T2 < SINR_i < T3 \ \forall\, i \in B$

- $S_{24}$: $SINR_i > T3 + \Delta_{24}$ for at least one BS (say i)

- $S_{42}$: $\quad$ $T1 < SINR_i < T2 - \Delta_{42} \ \forall\, i \in B_1$

$T1 \leq \ SINR_j \ < T3 \ \forall\, j \in B_2$

$B = B_1 \cup B_2$

$B_1 \cap B_2 = \theta$

- $S_{43}$: $T2 < SINR_i < T3 - \Delta_{43} \ \forall\, i \in B$

- $S_{34}$: $SINR_i > T3$ for at least one BS (say, i)

- $S_{14}$: $SINR_i > T3 + \Delta_{14}$ for at least one BS (say, i)

- $S_{41}$: $SINR_i < T1 - \Delta_{41} \ \forall\, i \in B$

- $S_{23}$: $SINR_i < T2 \leq T3 \ \forall\, i \in B$

- $S_{32}$: $\quad$ $SINR_i < T2 - \Delta_{32} \ \forall\, i \in B$

$T2 - \Delta_{32} < SINR_j \leq T3 \ \forall\, j \in B$

$B = B_1 \cup B_2$

$B_1 \cap B_2 = \theta$

……………..Equation 4

Where,

S$_{12}$ indicates UE transition from the first coordinated transmission mode "X1" to the second coordinated transmission mode "X2" and S$_{21}$ indicates UE transition from the second coordinated transmission mode "X2" to the first coordinated transmission mode "X1"

S$_{13}$ indicates UE transition from the first coordinated transmission mode "X1" to the third coordinated transmission mode "X3" and S$_{31}$ indicates UE transition from the third coordinated transmission mode "X3" to the first coordinated transmission mode "X1"

S$_{14}$ indicates UE transition from the first coordinated transmission mode "X1" to the fourth coordinated transmission mode "X4" and S$_{41}$ indicates UE transition from the fourth coordinated transmission mode "X4" to the first coordinated transmission mode "X1"

S$_{23}$ indicates UE transition from the second coordinated transmission mode "X2" to the third coordinated transmission mode "X3" and S$_{32}$ indicates UE transition from the third coordinated transmission mode "X3" to the second coordinated transmission mode "X2"

S$_{24}$ indicates UE transition from the second coordinated transmission mode "X2" to the fourth coordinated transmission mode "X4" and S$_{42}$ indicates UE transition from the fourth coordinated transmission mode "X4" to the second coordinated transmission mode "X2".

S$_{34}$ indicates UE transition from the third coordinated transmission mode "X3" to the fourth coordinated transmission mode "X4" and S$_{43}$ indicates UE transition from the fourth coordinated transmission mode "X4" to the third coordinated transmission mode "X3".

In another embodiment, the average SINR is computed which is required to determine the coordinated transmission mode. For every sub-band (or entire band) that is to be allocated to the UE, the SINR across the reference symbols of the past N1 sub-frames (or minimum time-frequency unit of scheduling) spaced N2 sub-frames apart is taken into consideration. The average SINRi is computed as follows:

(a) For UE speeds below v1 m/s, a sample average is taken by

$$\mathrm{SINR_i} \;=\; (\frac{1}{N_1 W_1}) \sum_{t=0}^{W_1} SINR(i - N_2 t)$$

..................... Equation 5

Where, "I" indicates the index of the sub-frame, i - N2*a > 0, where 1<a<W

For the UE speeds between v1 and v2 m/s, if the coefficient of variation (ratio of standard deviation to mean) of the SINR samples (that are used in the summation in Eq. 1 above) is below a threshold value (i.e., coordinated transmission threshold criteria) t1, then the sample mean of the SINR is calculated as shown in Eq. 1 above. Otherwise, the median of the samples is reported.

For speeds above v2 m/s, one of the following options can be chosen:

Minimum SINR from the samples as shown in Eq. 1 above.

In an embodiment, the effective SINR has to satisfy the value for a time period as given by the timer values as described in the Paragraph 0026. Here, the single value of the timer in the LTE will become a set of values of the timer depending on the BS in the transmission set and the signal strength at the UE from each of the BS in the transmission set.

In an embodiment, if the signal strength decreases below a threshold Qout, the UE is the to enter a Radio Link Failure State (RLF). A single counter is used to count the number of RLF measurements. If the number of counts is satisfied, the UE has to initiate RRC Connection Re-establishment procedure. For the case of partial transmission of information, only if the RLF condition is satisfied from all BSs in the transmission set, the RLF is declared. Further, if there is "k" BSs in the transmission set, there are k different counters for determining the RLF, each counter corresponding to the number of BSs that can actively transmit. Accordingly, there will be "k" thresholds for RLF. Only if the RLF condition is satisfied for the "k" thresholds using the corresponding counters, RLF is declared.

In another embodiment, the HO method can be executed at the UE or can be executed at the BS, if the BS has adequate information. The UE estimates the effective received SINR from each BS to which it is connected during joint transmission.

In another embodiment of the disclosure, all the ∆k (k = 1 to 7) can have the same values, possibly 0 too. The thresholds are for the SINR values averaged over suitable time or frequency. The decision for transition of the UE can be taken without consideration of the effective SINR. The time duration to check the signal strengths can be configured by the network or can be selected by the UE.

Unlike conventional systems, the partial information transmission wherein one of the BS (i.e., either BS 104 or BS 106) can transmit only a portion of the code word for the UE 102 (possibly, even a function of the code word) and other BSs can transmit the complete code word and the partial to complete code word transmission by other BS are functions of the signal conditions reported by the UE 102. The ping-pong effect of the soft-handover can be reduced and also decrease the number of resources used due to partial information transmission on the links is achieved.

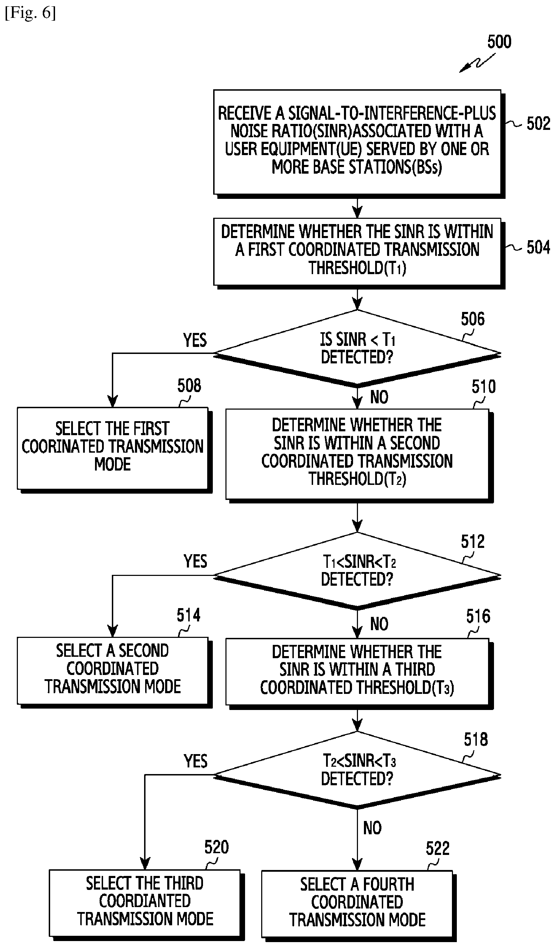

FIG. 6 is a flow diagram illustrating a method 500 for controlling transmission of code words during handover or otherwise in a wireless network, according to embodiments as disclosed herein. At step 502, the method 500 includes receiving a SINR associated with the UE served by one or more base stations (BSs). The BSs can be associated with a plurality of coordinated transmission modes indicating whether the BSs transmit a complete code word or a partial code word to the UE based on transmission threshold criteria. The method 500 allows a controller module 304 in the BS to receive the SINR associated with the UE served the BSs. At step 504, the method 500 includes determining whether the SINR is within the first coordinated transmission threshold. The first coordinated transmission threshold criteria can be associated with a first coordinated transmission mode from the plurality of coordinated transmission modes. The method 500 allows the controller module 304 to determine whether the SINR is within the first coordinated transmission threshold.

If it is determined at step 506 that the SINR is within the first coordinated transmission threshold, then at step 508 the method 500 allows selecting the first coordinated transmission mode. The first coordinated transmission mode allows all the BSs to transmit the complete code word to the UE. The method 500 allows the controller module 304 to select the first coordinated transmission mode where all the BSs transmit complete code word to the UE. If it is determined at step 506 that the SINR exceeds the first coordinated transmission threshold, then at step 510 the method 500 includes determining whether the SINR is within the second coordinated transmission threshold. The second coordinated transmission threshold can be associated with a second coordinated transmission mode from the plurality of coordinated transmission modes. The method 500 allows the controller module 304 to determine whether the SINR is within the second coordinated transmission threshold. If it is determined at step 512 that the SINR is within the second coordinated transmission threshold and exceeds the first coordinated transmission threshold, then at step 514 the method 500 includes selecting a second coordinated transmission mode. The second coordinated transmission mode allows some BSs to transmit the complete code word to the UE and some BSs to transmit the partial code word to the UE. The method 500 allows the controller module 304 to select the second coordinated transmission mode which allows some BSs to transmit the complete code word to the UE and some BSs to transmit the partial code word to the UE.

If it is determined at step 512 that the SINR exceeds the second coordinated transmission threshold, then at step 516 the method 500 includes determining whether the SINR is within a third coordinated transmission threshold. The third coordinated transmission threshold can be associated with a third coordinated transmission mode from the plurality of coordinated transmission modes. The method 500 allows the controller module 304 to determine whether the SINR is within the third coordinated transmission threshold. If it is determined at step 518 that the SINR is within the third coordinated transmission threshold and exceeds the second coordinated transmission threshold, then at step 520 the method 500 includes selecting the third coordinated transmission mode. The third coordinated transmission mode allows all the BSs to transmit the partial code word to the UE. The method 500 allows the controller module 304 to select the third coordinated transmission mode which allows all the BSs to transmit the partial code word to the UE. If it is determined at step 518 that the SINR exceeds the third coordinated transmission threshold, then at step 522 the method includes selecting a fourth coordinated transmission mode. The fourth coordinated transmission mode allows only one BS to transmit the complete code word to the UE. The method 500 allows the controller module 304 to select the fourth coordinated transmission mode allowing only one BS to transmit the complete code word to the UE. In an embodiment, the UE can be configured to maintain a set of timer values and the RLF counters at the BS for the handover based on the selected coordinated transmission mode.

The various actions, acts, blocks, steps, and the like in method 500 can be performed in the order presented, in a different order or simultaneously. Further, in some embodiments, some actions, acts, blocks, steps, and the like may be omitted, added, modified, skipped, and the like without departing from the scope of the disclosure.

The embodiments disclosed herein can be implemented through at least one software program running on at least one hardware device and performing network management functions to control the elements. The elements shown in Figs. 2 and 3 include blocks which can be at least one of a hardware device, or a combination of hardware device and software module.

Although the present disclosure has been described with an exemplary embodiment, various changes and modifications may be suggested to one skilled in the art. It is intended that the present disclosure encompass such changes and modifications as fall within the scope of the appended claims.

**Claims**

1. A method for operating a base station, BS, in a wireless network, the wireless network comprising a plurality of coordinated BSs, each associated with a plurality of coordinated transmission modes, the method comprising:

   receiving (502) channel quality information related to a user equipment, UE, served by the plurality of BSs;
   determining (504) a coordinated transmission mode based on the channel quality information according to a transmission threshold criteria; and
   transmitting a complete codeword or a partial codeword according to the coordinated transmission mode during handover of the UE,
   wherein the coordinated transmission mode indicates whether the complete codeword or the partial codeword is transmitted by each of the plurality of BSs.

2. The method of claim 1, wherein determining the coordinated transmission mode comprises:

   determining whether the channel quality information is within a first threshold value; and
   selecting a first coordinated transmission mode in response to the determination that the channel quality information is within the first threshold value,
   wherein the first threshold value is related to the first coordinated transmission mode from the plurality of coordinated transmission modes, and
   wherein the first coordinated transmission mode corresponds to a mode in which each of the plurality of BSs transmits the complete codeword to the UE.

3. The method of claim 2, wherein determining the coordinated transmission mode comprises:

   determining whether the channel quality information is within a second threshold value, in response to the determination that the channel quality information exceeds the first threshold value; and
   selecting a second coordinated transmission mode according to the determination that the channel quality information is within the second threshold value,
   wherein the second threshold value is related to the second coordinated transmission mode in the plurality of coordinated transmission modes, and
   wherein the second coordinated transmission mode corresponds to a mode in which one of the plurality of BSs transmits the complete codeword to the UE and another of the plurality of BSs transmits the partial codeword to the UE.

4. The method of claim 3, wherein determining the coordinated transmission mode comprises:

   determining (518) whether the channel quality information is within a third threshold value in response to the determination that the channel quality information exceeds the second threshold value; and
   selecting (520) a third coordinated transmission mode according to the determination that the channel quality information is within the third threshold value,
   wherein the third threshold value is related to the third coordinated transmission mode in the plurality of coordinated transmission modes, and
   wherein the third coordinated transmission mode corresponds to a mode in which all BSs transmit the partial codeword to the UE.

5. The method of claim 4, wherein determining the coordinated transmission mode comprises selecting (522) a fourth coordinated transmission mode in response to the determination that the channel quality information exceeds the third threshold value,
   wherein the fourth coordinated transmission mode corresponds to a mode in which only one of the plurality of BSs transmits a complete codeword to the UE and the remaining BSs of the plurality of BSs transmit neither the complete codeword nor the partial codeword.

6. A base station, BS, apparatus in a wireless network, the wireless network comprising a plurality of coordinated BSs, each associated with a plurality of coordinated transmission modes, the apparatus comprising:

   a receiver, Rx, module (302) configured to receive channel quality information related to a user equipment, UE, served by the plurality of BSs;

a control module (304) configured to determine a coordinated transmission mode based on the channel quality information according to a transmission threshold criteria, and

a transmitter, Tx, module (308) configured to transmit a complete codeword or a partial codeword according to the coordinated transmission mode during handover of the UE, and

wherein the coordinated transmission mode indicates whether the complete codeword or the partial codeword is transmitted by each of the plurality of BSs.

7. The BS apparatus of claim 6, wherein the control module is configured to control to determine whether the channel quality information is within a first threshold value, and

select a first coordinated transmission mode in response to the determination that the channel quality information is within the first threshold value,

wherein the first threshold value is related to the first coordinated transmission mode from the plurality of coordinated transmission modes, and

wherein the first coordinated transmission mode corresponds to a mode in which each of the plurality of BSs transmits the complete codeword to the UE.

8. The BS apparatus of claim 7, wherein the control module is configured to determine whether the channel quality information is within a second threshold value, in response to the determination that the channel quality information exceeds the first threshold value, and

select a second coordinated transmission mode in response to the determination that the channel quality information is within the second threshold value,

wherein the second threshold value is related to the second coordinated transmission mode in the plurality of coordinated transmission modes, and

wherein the second coordinated transmission mode corresponds to a mode in which one of the plurality of BSs transmits the complete codeword to the UE and another of the plurality of BSs transmits the partial codeword to the UE.

9. The BS apparatus of claim 8, wherein the control module is configured to control to determine whether the channel quality information is within a third threshold value in response to the determination that the channel quality information exceeds the second threshold value, and

select a third coordinated transmission mode in response to the determination that the channel quality information is within the third threshold value,

wherein the third threshold value is related to the third coordinated transmission mode in the plurality of coordinated transmission modes, and

wherein the third coordinated transmission mode corresponds to a mode in which all BSs transmit the partial codeword to the UE.

10. The BS apparatus of claim 9, wherein the control module is configured to control to select a fourth coordinated transmission mode in response to the determination that the channel quality information exceeds the third threshold value,

wherein the fourth coordinated transmission mode corresponds to a mode in which only one of the plurality of BSs transmits the complete codeword to the UE and the remaining BSs of the plurality of BSs transmit neither the complete codeword nor the partial codeword.

11. The BS apparatus of claim 6, wherein one value among a set of timer vales and a radio link failure, RLF, counter are maintained for the handover based on the coordinated transmission mode.

12. The BS apparatus of claim 6, wherein the threshold criteria comprises a time criteria.

**Patentansprüche**

1. Verfahren zum Betreiben einer Basisstation, BS, in einem drahtlosen Netz, wobei das Verfahren eine Vielzahl von koordinierten BSs umfasst, wobei jede mit einer Vielzahl von koordinierten Übertragungsarten verbunden ist, das Verfahren Folgendes umfassend:

Empfangen (502) von Kanalqualitätsinformationen bezogen auf ein Benutzergerät, UE, das von der Vielzahl von BSs bedient wird;

Bestimmen (504) eines koordinierten Übertragungsmodus, basierend auf den Kanalqualitätsinformationen, entsprechend einem Schwellenkriterium für Übertragung; und
Übertragen eines vollständigen Codeworts oder eines partiellen Codeworts entsprechend dem koordinierten Übertragungsmodus während der Übergabe des UE, wobei der koordinierte Übertragungsmodus anzeigt, ob das vollständige Codewort oder das partielle Codewort von jeder der Vielzahl von BSs übertragen wird.

2. Verfahren nach Anspruch 1, wobei das Bestimmen des koordinierten Übertragungsmodus Folgendes umfasst:

Bestimmen, ob die Kanalqualitätsinformationen innerhalb eines ersten Schwellenwerts liegen; und
Auswahl eines ersten koordinierten Übertragungsmodus nach der Feststellung, dass die Kanalqualitätsinformationen innerhalb des ersten Schwellenwerts liegen,
wobei der erste Schwellenwert mit dem ersten koordinierten Übertragungsmodus von der Vielzahl von koordinierten Übertragungsarten verbunden ist, und
wobei der erste koordinierte Übertragungsmodus einem Modus entspricht, bei dem jede der Vielzahl von BSs das vollständige Codewort an das UE überträgt.

3. Verfahren nach Anspruch 2, wobei das Bestimmen des koordinierten Übertragungsmodus Folgendes umfasst:

Bestimmen, ob die Kanalqualitätsinformationen innerhalb eines zweiten Schwellenwerts liegen, nach der Feststellung, dass die Kanalqualitätsinformationen den ersten Schwellenwert überschreiten; und
Auswahl eines zweiten koordinierten Übertragungsmodus entsprechend der Feststellung, dass die Kanalqualitätsinformationen innerhalb des zweiten Schwellenwerts liegen,
wobei der zweite Schwellenwert mit dem zweiten koordinierten Übertragungsmodus in der Vielzahl von koordinierten Übertragungsarten verbunden ist, und
wobei der zweite koordinierte Übertragungsmodus einem Modus entspricht, bei dem eine aus der Vielzahl von BSs das vollständige Codewort an das UE überträgt und eine andere aus der Vielzahl von BSs das partielle Codewort an das UE überträgt.

4. Verfahren nach Anspruch 3, wobei das Bestimmen des koordinierten Übertragungsmodus Folgendes umfasst:

Bestimmen (518), ob die Kanalqualitätsinformationen innerhalb eines dritten Schwellenwerts liegen, nach der Feststellung, dass die Kanalqualitätsinformationen den zweiten Schwellenwert überschreiten; und
Auswahl (520) eines dritten koordinierten Übertragungsmodus entsprechend der Feststellung, dass die Kanalqualitätsinformationen innerhalb des dritten Schwellenwerts liegen,
wobei der dritte Schwellenwert mit dem dritten koordinierten Übertragungsmodus in der Vielzahl von koordinierten Übertragungsarten verbunden ist, und
wobei der dritte koordinierte Übertragungsmodus einem Modus entspricht, bei dem alle BS das partielle Codewort an das UE übertragen.

5. Verfahren nach Anspruch 4, wobei das Bestimmen des koordinierten Übertragungsmodus die Auswahl (522) eines vierten koordinierten Übertragungsmodus umfasst, nach der Feststellung, dass die Kanalqualitätsinformationen den dritten Schwellenwert überschreiten,
wobei der vierte koordinierte Übertragungsmodus einem Modus entspricht, bei dem nur eine der Vielzahl von BSs ein vollständiges Codewort an das UE überträgt und die verbleibenden BSs der Vielzahl von BSs weder das vollständige noch das partielle Codewort übertragen.

6. Basisstation (BS)-Vorrichtung in einem drahtlosen Netz, wobei das drahtlose Netz eine Vielzahl von koordinierten BSs umfasst, wobei jede mit einer Vielzahl von koordinierten Übertragungsarten verbunden ist, wobei die Vorrichtung Folgendes umfasst:

ein Empfänger(Rx)-Modul (302), konfiguriert, um Kanalqualitätsinformationen zu empfangen, bezogen auf ein Benutzergerät, UE, das von der Vielzahl von BSs bedient wird;
ein Steuermodul (304), konfiguriert, um einen koordinierten Übertragungsmodus zu bestimmen, basierend auf den Kanalqualitätsinformationen entsprechend einem Schwellenkriterium der Übertragung, und
ein Sender (Tx)-Modul (308), konfiguriert, um ein vollständiges Codewort oder ein partielles Codewort entsprechend dem koordinierten Übertragungsmodus während einer Übergabe des UE zu übertragen, und
wobei der koordinierte Übertragungsmodus anzeigt, ob das vollständige Codewort oder das partielle Codewort von jeder der Vielzahl von BSs übertragen wird.

**7.** BS-Vorrichtung nach Anspruch 6, wobei das Steuermodul konfiguriert ist, um zu ermitteln, ob die Kanalqualitätsinformationen innerhalb eines ersten Schwellenwerts liegen und

einen ersten koordinierten Übertragungsmodus auszuwählen, nach der Feststellung, dass die Kanalqualitätsinformationen innerhalb des ersten Schwellenwerts liegen,

wobei der erste Schwellenwert mit dem ersten koordinierten Übertragungsmodus von der Vielzahl von koordinierten Übertragungsarten verbunden ist und

wobei der erste koordinierte Übertragungsmodus einem Modus entspricht, bei dem jede der Vielzahl von BSs das vollständige Codewort an das UE überträgt.

**8.** BS-Vorrichtung nach Anspruch 7, wobei das Steuermodul konfiguriert ist, um zu bestimmen, ob die Kanalqualitätsinformationen innerhalb eines zweiten Schwellenwerts liegen, nach der Feststellung, dass die Kanalqualitätsinformationen den ersten Schwellenwert überschreiten und

einen zweiten koordinierten Übertragungsmodus auszuwählen, nach der Feststellung, dass die Kanalqualitätsinformationen innerhalb des zweiten Schwellenwerts liegen,

wobei der zweite Schwellenwert mit dem zweiten koordinierten Übertragungsmodus in der Vielzahl von koordinierten Übertragungsarten verbunden ist und

wobei der zweite koordinierte Übertragungsmodus einem Modus entspricht, bei dem eine aus der Vielzahl von BSs das vollständige Codewort an das UE überträgt und eine andere aus der Vielzahl von BSs das partielle Codewort an das UE überträgt.

**9.** BS-Vorrichtung nach Anspruch 8, wobei das Steuermodul konfiguriert ist, um zu bestimmen, ob die Kanalqualitätsinformationen innerhalb eines dritten Schwellenwerts liegen, nach der Feststellung, dass die Kanalqualitätsinformationen den zweiten Schwellenwert überschreiten und

einen dritten koordinierten Übertragungsmodus auszuwählen, nach der Feststellung, dass die Kanalqualitätsinformationen innerhalb des dritten Schwellenwerts liegen, wobei der dritte Schwellenwert mit dem dritten koordinierten Übertragungsmodus in der Vielzahl von koordinierten Übertragungsarten verbunden ist und

wobei der dritte koordinierte Übertragungsmodus einem Modus entspricht, bei dem alle BSs das partielle Codewort an das UE übertragen.

**10.** BS-Vorrichtung nach Anspruch 9, wobei das Steuermodul konfiguriert ist, um einen vierten koordinierten Übertragungsmodus auszuwählen, nach der Feststellung, dass die Kanalqualitätsinformationen den dritten Schwellenwert überschreiten,

wobei der vierte koordinierte Übertragungsmodus einem Modus entspricht, bei dem nur eine der Vielzahl von BSs das vollständige Codewort an das UE überträgt und die verbleibenden BSs der Vielzahl von BSs weder das vollständige noch das partielle Codewort übertragen.

**11.** BS-Vorrichtung nach Anspruch 6, wobei ein Wert aus einem Satz von Zeitgeberwerten und ein Funkverbindungsfehler (RLF)-Zähler für die Übergabe beibehalten werden, basierend auf dem koordinierten Übertragungsmodus.

**12.** BS-Vorrichtung nach Anspruch 6, wobei das Schwellenkriterium ein Zeitkriterium umfasst.


**Revendications**

**1.** Procédé de fonctionnement d'une station de base, BS, dans un réseau sans fil, le réseau sans fil comprenant une pluralité de BS coordonnées, chacune étant associée à une pluralité de modes de transmission coordonnée, le procédé comprenant :

recevoir (502) des informations de qualité de canal associées à un équipement d'utilisateur, UE, desservi par la pluralité de BS ;

déterminer (504) un mode de transmission coordonnée sur la base des informations de qualité de canal selon des critères de seuil de transmission ;

transmettre un mot de code complet ou un mot de code partiel conformément au mode de transmission coordonnée lors du transfert de l'UE,

où le mode de transmission coordonnée indique si le mot de code complet ou le mot de code partiel est transmis par chacune de la pluralité de BS.

**2.** Procédé selon la revendication 1, où déterminer le mode de transmission coordonnée comprend :

déterminer si l'information de qualité de canal se situe dans une première valeur de seuil ; et
sélectionner un premier mode de transmission coordonnée en réponse à la détermination selon laquelle l'information de qualité de canal se situe dans la première valeur de seuil,
où la première valeur de seuil est associée au premier mode de transmission coordonnée de la pluralité de modes de transmission coordonnée, et
où le premier mode de transmission coordonnée correspond à un mode où chacune de la pluralité de BS transmet le mot de code complet à l'UE.

3. Procédé selon la revendication 2, où déterminer le mode de transmission coordonnée comprend :

déterminer si l'information de qualité de canal se situe dans une deuxième valeur de seuil, en réponse à la détermination selon laquelle l'information de qualité de canal excède la première valeur de seuil ; et
sélectionner un deuxième mode de transmission coordonnée conformément à la détermination selon laquelle l'information de qualité de canal se situe dans la deuxième valeur de seuil,
où la deuxième valeur de seuil est associée au deuxième mode de transmission coordonnée dans la pluralité de modes de transmission coordonnée, et
où le deuxième mode de transmission coordonnée correspond à un mode où l'une parmi la pluralité de BS transmet le mot de code complet à l'UE et une autre parmi la pluralité de BS transmet le mot de code partiel à l'UE.

4. Procédé selon la revendication 3, où déterminer le mode de transmission coordonnée comprend :

déterminer (518) si l'information de qualité de canal se situe dans une troisième valeur de seuil en réponse à la détermination selon laquelle l'information de qualité de canal excède la deuxième valeur de seuil ; et
sélectionner (520) un troisième mode de transmission coordonnée conformément à la détermination selon laquelle l'information de qualité de canal se situe dans la troisième valeur de seuil,
où la troisième valeur de seuil est associée au troisième mode de transmission coordonnée dans la pluralité de modes de transmission coordonnée et
où le troisième mode de transmission coordonnée correspond à un mode où toutes les BS transmettent le mot de code partiel à l'UE.

5. Procédé selon la revendication 4, où déterminer le mode de transmission coordonnée comprend la sélection (522) d'un quatrième mode de transmission coordonnée en réponse à la détermination selon laquelle l'information de qualité de canal excède la troisième valeur de seuil,
où le quatrième mode de transmission coordonnée correspond à un mode où une seule de la pluralité de BS transmet un mot de code complet à l'UE et les BS restantes de la pluralité de BS ne transmettent ni le mot de code complet ni le mot de code partiel.

6. Dispositif de station de base, BS, dans un réseau sans fil, le réseau sans fil comprenant une pluralité de BS coordonnées, chacune étant associée à une pluralité de modes de transmission coordonnée, le dispositif de BS comprenant :

un module récepteur, Rx, (302) configuré pour recevoir l'information de qualité de canal associée à un équipement d'utilisateur, UE, desservi par la pluralité de BS ;
un module de commande (304) configuré pour déterminer un mode de transmission coordonnée sur la base de l'information de qualité de canal selon des critères de seuil de transmission, et
un module émetteur, Tx, (308) configuré pour transmettre un mot de code complet ou un mot de code partiel conformément au mode de transmission coordonnée lors d'un transfert de l'UE, et
où le mode de transmission coordonnée indique si le mot de code complet ou le mot de code partiel est transmis par chacune de la pluralité de BS.

7. Dispositif de BS selon la revendication 6, où le module de commande est configuré pour déterminer si l'information de qualité de canal se situe dans une première valeur de seuil, et
sélectionner un premier mode de transmission coordonnée en réponse à la détermination selon laquelle l'information de qualité de canal se situe dans la première valeur de seuil,
où la première valeur de seuil est associée au premier mode de transmission coordonnée de la pluralité de modes de transmission coordonnée, et
où le premier mode de transmission coordonnée correspond à un mode où chacune de la pluralité de BS transmet le mot de code complet à l'UE.

**8.** Dispositif de BS selon la revendication 7, où le module de commande est configuré pour déterminer si l'information de qualité de canal se situe dans une deuxième valeur de seuil, en réponse à la détermination selon laquelle l'information de qualité de canal excède la première valeur de seuil, et

sélectionner un deuxième mode de transmission coordonnée en réponse à la détermination selon laquelle l'information de qualité de canal se situe dans la deuxième valeur de seuil,

où la deuxième valeur de seuil est associée au deuxième mode de transmission coordonnée dans la pluralité de modes de transmission coordonnée, et

où le deuxième mode de transmission coordonnée correspond à un mode où l'une de la pluralité de BS transmet le mot de code complet à l'UE et une autre de la pluralité de BS transmet le mot de code partiel à l'UE.

**9.** Dispositif de BS selon la revendication 8, où le module de commande est configuré pour déterminer si l'information de qualité de canal se situe dans une troisième valeur de seuil en réponse à la détermination selon laquelle l'information de qualité de canal excède la deuxième valeur de seuil, et

sélectionner un troisième mode de transmission coordonnée en réponse à la détermination selon laquelle l'information de qualité de canal se situe dans la troisième valeur de seuil,

où la troisième valeur de seuil est associée au troisième mode de transmission coordonnée dans la pluralité de modes de transmission coordonnée, et

où le troisième mode de transmission coordonnée correspond à un mode où toutes les BS transmettent le mot de code partiel à l'UE.

**10.** Dispositif de BS selon la revendication 9, où le module de commande est configuré pour sélectionner un quatrième mode de transmission coordonnée en réponse à la détermination selon laquelle l'information de qualité de canal excède la troisième valeur de seuil,

où le quatrième mode de transmission coordonnée correspond à un mode où une seule de la pluralité de BS transmet le mot de code complet à l'UE et les BS restantes de la pluralité de BS ne transmettent ni le mot de code complet ni le mot de code partiel.

**11.** Dispositif de BS selon la revendication 6, où une valeur parmi un ensemble de valeurs de minuterie et un compteur de défaillance de liaison radio, RLF, sont maintenus pour le transfert sur la base du mode de transmission coordonnée.

**12.** Dispositif de BS selon la revendication 6, où les critères de seuil comprennent des critères de temps.

[Fig. 1a]

Complete code word

Complete code word

User equipment(UE)
102

Base station
104

Base station
106

[Fig. 1b]

break

User equipment(UE)
102

Base station
104

Base station
106

[Fig. 2]

200

Base station
104

User equipment(UE)
102

Base station
106

Link-A

Link-B

[Fig. 3]

Base Station <u>104</u> or Base Station <u>106</u>

| Receiver(Rx) moudule <u>302</u> | Controller module <u>304</u> |
| Storage module <u>306</u> | Transmitter(Tx) module <u>308</u> |

[Fig. 4]

[Fig. 5]

[Fig. 6]

500

RECEIVE A SIGNAL-TO-INTERFERENCE-PLUS NOISE RATIO(SINR)ASSOCIATED WITH A USER EQUIPMENT(UE) SERVED BY ONE OR MORE BASE STATIONS(BSs) — 502

DETERMINE WHETHER THE SINR IS WITHIN A FIRST COORDINATED TRANSMISSION THRESHOLD($T_1$) — 504

506
IS SINR < $T_1$ DETECTED?

YES

508
SELECT THE FIRST COORINATED TRANSMISSION MODE

NO 510
DETERMINE WHETHER THE SINR IS WITHIN A SECOND COORDINATED TRANSMISSION THRESHOLD($T_2$)

512
$T_1$<SINR<$T_2$ DETECTED?

YES

514
SELECT A SECOND COORDINATED TRANSMISSION MODE

NO 516
DETERMINE WHETHER THE SINR IS WITHIN A THIRD COORDINATED THRESHOLD($T_3$)

518
$T_2$<SINR<$T_3$ DETECTED?

YES

NO

520
SELECT THE THIRD COORDIANTED TRANSMISSION MODE

522
SELECT A FOURTH COORDINATED TRANSMISSION MODE

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130017825 A1